# EUROPÄISCHE PATENTSCHRIFT

(11) **EP 1 321 631 B1**
(45) Veröffentlichungstag und Bekanntmachung des Hinweises auf die Patenterteilung: **30.03.2005**
(21) Anmeldenummer: 02019706.7
(22) Anmeldetag: 02.09.2002
(51) Int. Cl.: F01L 1/02

(54) **Vormontierte Triebmitteleinheit**
Preassembled distribution unit
Unité de distribution préassemblée

(30) Priorität: 20.12.2001 DE 20120656 U
(43) Veröffentlichungstag der Anmeldung: 25.06.2003
(73) Patentinhaber: JOH. WINKLHOFER & SÖHNE GmbH & Co KG, D-81369 München (DE)
(72) Erfinder: Ketterl, Sandra, 85235 Odelzhausen (DE); Belmer, Stefan, 85646 Anzing (DE)
(74) Vertreter: Grünecker, Kinkeldey, Stockmair & Schwanhäusser Anwaltssozietät

(56) Entgegenhaltungen:
- EP-A- 0 297 263
- EP-A- 0 848 139
- DE-A- 3 909 458
- GB-A- 263 987
- US-A- 4 770 399

## Beschreibung

Die Erfindung bezieht sich auf eine vormontierte Triebmitteleinheit mit einem einteilig ausgebildeten Tragkörper, mindestens zwei in Haltetaschen am Tragkörper angeordneten Triebmittelrädern und einem gemeinsam um die Triebmittelräder gelegten Endlostriebmittel, wobei mindestens ein Bestandteil einer Haltetasche durch ein auf dem Tragkörper mittels mindestens einer Befestigungseinrichtung angebrachtes Halteelement gebildet ist.

Eine solche vormontierte Triebmitteleinheit ist z.B. aus der DE-OS-39 09 458 bekannt. Bei dieser Vorrichtung handelt es sich um ein Kettenradhalterungs- und Kettenführungselement für eine Steuerkette einer Brennkraftmaschine. Das Kettenradhalterungs- und Kettenführungselement sieht bogenförmige Nuten vor, die die Kettenräder und die Steuerkette lose aufnehmen. Eine Nut zur Aufnahme eines Kettenrades wird durch eine lösbare Platte und das Kettenradhalterungs- und Kettenführungselement gebildet. Des Weiteren zeigt eine Ausführungsform das Kettenradhalterungs- und Kettenführungselement zusammen mit einer schwenkbar gelagerten, mittels einer Druckfeder gespannten Kettenspanneinrichtung.

Eine weitere vormontierte Triebmitteleinheit ist in der US-A-4 879 977 beschrieben. Bei dieser Vorrichtung werden zwei Zahnräder von einer entsprechend ausgeformten Führungsplatte in Position gehalten. Damit die Zahnräder in den entsprechenden Aussparungen dieser Führungsplatte angeordnet werden können, darf die Kette noch nicht geschlossen sein. Die Kette wird nach dem Einlegen der Zahnräder in die entsprechenden Aussparungen um diese herumgelegt und verschlossen.

Andere Möglichkeiten bestehen darin, z.B. den Tragkörper mehrteilig auszubilden, siehe z.B. US-A-4 869 708 oder EP-A-0 280 365, so dass ein Anordnen der Triebmittelräder auch mit herumgelegtem Endlostriebmittel durchgeführt werden kann.

Ein weiterer einteiliger Tragkörper ist aus der EP 0 848 139 A1 bekannt. Bei dieser vormontierten Zugmitteltriebeinheit werden die Zugmittelräder mit herumgelegtem Zugmittel für die Montage in Haltetaschen positioniert und durch ein einteilig mit einer Haltevorrichtung ausgestaltetes Rasthalteelement fixiert.

Die vorgenannten vormontierten Triebmitteleinheiten verbleiben mitsamt des Tragkörpers nach der Montage an einer Antriebseinheit, insbesondere einem Motorblock einer Brennkraftmaschine, in eben dieser Antriebseinheit. Während hauptsächlich eine Vormontage der Triebmittelräder und des Endlostriebmittels ermöglicht werden soll, übernehmen bestimmte Bauelemente der Triebmitteleinheit auch während der Hauptmontage und im späteren Einsatz zugewiesene Funktionen. Andere Bauelemente und Funktionen treten im späteren Einsatz vollständig in den Hintergrund. Die verschiedenen Aufgaben aus der Montage und dem späterem Einsatz führen, insbesondere im Hinblick auf die im Bereich der Automobilindustrie hohen Stückzahlen und der fortschreitenden Automatisierung, zu einem ständigem Verbesserungsbedarf und einer notwendigen Anpassung an gestiegene Anforderungen.

Der vorliegenden Erfindung liegt die Aufgabe zugrunde eine Triebmitteleinheit der eingangs genannten Art bereitzustellen, die hinsichtlich der verschiedenen gewünschten Funktionen und Anforderungen verbessert ausgeführt ist.

Diese Aufgabe wird erfindungsgemäß dadurch gelöst, dass das Halteelement eine Abstützeinrichtung zum radialen Abstützen des Triebmittelrades aufweist.

Erst nach dem Einlegen der Triebmittelräder und des Endlostriebmittel wird die Haltetasche durch die Befestigung des Halteelements auf dem Tragkörper gebildet. Das erfindungsgemäß ausgestaltete Halteelement kann das gleichzeitige Einlegen der Triebmittelräder und des Endlostriebmittels, besonders bei Triebmitteleinheiten mit mehr als zwei Triebmittelrädern, erleichtern. Durch die radiale Abstützung des Triebmittelrades kann das Halteelement auf eine gute Krafteinleitung, insbesondere bei einem vorgespannten Triebmittel, abgestimmt werden. Zur Erfüllung dieser Funktion kann im wesentlichen auf die Ausgestaltung des Halteelements zurückgegriffen werden, während der Tragkörper hinsichtlich seiner zu erfüllenden Aufgaben ausgestaltet werden kann. Der Aufbau des Tragkörpers läßt sich hierdurch vereinfachen.

Eine günstige Ausführungsform sieht vor, dass das durch das Halteelement abgestützte Triebmittelrad eine Nabe aufweist und dass die Abstützeinrichtung die Nabe des Triebmittelrades radial abstützt. Die Abstützung des Triebmittelrades an der Nabe erleichtert die Positionierung des Triebmittelrades und verbessert die Krafteinleitung.

Aus Vereinfachungsgründen kann das Halteelement mindestens eine das Triebmittelrad axial sichernde Seitenwand der Haltetasche aufweisen. Hierdurch übernimmt das Halteelement auch eine axiale Sicherungsfunktion und kann daher unabhängig vom Tragkörper gezielt für diese Aufgabe ausgestaltet sein.

Eine vorteilhafte Ausgestaltung ergibt sich dadurch, dass das Halteelement eine die Abstützeinrichtung umfassende und im Querschnitt im wesentlichen L-förmige Aufnahme als Bestandteil der Haltetasche umfasst, deren erster L-Schenkel parallel und deren anderer L-Schenkel senkrecht zu einer Achse des Triebmittelrades ausgerichtet ist und der senkrecht verlaufende L-Schenkel mindestens eine axial sichernde Seitenwand der Haltetasche umfasst. Ein solches L-förmiges Profil lässt sich sehr einfach und kostengünstig zur Erfüllung der gewünschten Aufgabe herstellen.

Vorteilhafterweise kann die radiale Abstützeinrichtung des Halteelements von dem senkrecht verlaufenden L-Schenkel gebildet sein, der mit einer an die Außenkontur der Nabe angepassten konkaven Stirnfläche an dieser formschlüssig anliegend ausgestaltet ist. Diese Maßnahme sorgt dafür, dass eine großflächige Anlage der Abstützeinrichtung, mit einer besseren Kraftverteilung und geringen Flächenpressung, insbesondere bei vorgespannten Ausführungsformen, erzeugt werden kann.

Eine geeignete Ausführungsform sieht vor, dass eine weitere, in einer zweiten Richtung axial sichernde Seitenwand der bereichsweise von dem Halteelement gebildeten Haltetasche von dem Tragkörper gebildet ist. Diese erfindungsgemäße Ausgestaltung des Tragkörpers vereinfacht den Montagevorgang durch eine bereits für die axial sichernde Seitenwand gebildeten Anschlagfläche. Die Fixierung in radialer und einer weiteren axialen Richtung erfolgt anschließend durch das Halteelement.

Günstigerweise kann das Halteelement gegenüber dem vom Endlostriebmittel umschlossenen Bereich des abgestützten Triebmittelrades auf dem Tragkörper angebracht sein. Die durch das Endlostriebmittel auf das Triebmittelrad eingebrachte Kraft verläuft durch den Mittelpunkt des Triebmittelrades in den gegenüberliegenden Abstützbereich des Halteelements. Z.B. könnte die Positionierung der Symmetrieachse des Halteelements auf dem resultierenden Kraftvektor im gegenüber dem vom Endlostriebmittel umschlossenen Bereich erfolgen, wodurch eine gleichmäßige Krafteinleitung in das Halteelement erreicht werden kann.

Bevorzugt kann die Abstützeinrichtung das Triebmittelrad über einen Winkelbereich von 60° bis 120° abstützend ausgestaltet sein. Dieser Winkelbereich reicht für die meisten Einsatzzwecke aus, eine gute Krafteinleitung bei möglichst geringem Konstruktionsaufwand hinsichtlich der Stabilität des Halteelements zu erreichen.

Eine vorteilhafte Ausgestaltung sieht vor, dass die Abstützeinrichtung das Triebmittelrad über einen Winkelbereich von 70° bis 90° abstützend ausgestaltet ist. In diesem Winkelbereich wird eine sehr gute Halterung des Triebmittelrades erreicht, bei gleichzeitig optimiertem Materialeinsatz für die Herstellung des Halteelements.

Eine günstige Ausführungsform sieht vor, dass die Befestigungseinrichtung mindestens eine von der Haltetasche wegweisende mit dem Tragkörper im wesentlichen flächig zur Anlage gebrachte Befestigungszunge aufweist. Die Befestigungszunge kann in geeigneter Weise die, insbesondere bei einem vorgespannten Endlostriebmittel auftretenden, am Halteelement angreifenden Kippkräfte an den Tragkörper übertragen. Auch ermöglicht die Befestigungszunge eine von der Haltetasche und der radialen Abstützeinrichtung des Halteelements entfernte Befestigung des Halteelements auf dem Tragkörper, wobei die im wesentlichen flächig gestalteten Anlageflächen auf dem Tragkörper und dem Halteelement eine einfache Konstruktion und leichte Montage bewirken.

Vorteilhafterweise kann zwischen der Befestigungszunge und der L-förmigen Aufnahme des Halteelements mindestens ein Versteifungselement ausgebildet sein. Durch das Versteifungselement kann das Halteelement größere Kräfte aufnehmen und eine bessere Krafteinleitung auf die Befestigungszunge ermöglichen.

Ein weiteres Ausführungsbeispiel sieht vor, dass die Befestigungseinrichtung mindestens ein mit dem Tragkörper verrastetes Rastelement aufweist. Mit Rastelementen ausgestattete Halteelemente können schnell montiert und sicher positioniert werden.

Eine günstige Variante sieht vor, dass das Rastelement als längsgeschlitzter, radial einfedernder Raststift ausgestaltet ist. Ein längsgeschlitzter radial einfedernder Raststift ist eine stabile Ausführungsform eines Rastelements, dass in geeigneter Weise die dauerhafte Fixierung des Halteelements in einer bestimmten Lage ermöglicht.

Eine besonders bevorzugte Ausgestaltung sieht vor, dass der Raststift einen radial einfedernden Rastkopf und der Tragkörper eine Rastöffnung mit einer Hinterschneidung aufweist, wobei der Rastkopf im eingefederten Zustand durch die Rastöffnung des Tragkörpers hindurchschiebbar ausgestaltet ist und an einem Endbereich der Rastöffnung an der Hinterschneidung am Tragkörper verrastet ist. Der Rastkopf ist mit geringer Kraft montierbar und verrastet ohne eine Beschädigung des Rastkopfs sicher an der Hinterschneidung am Tragkörper.

Eine vorteilhafte Ausführungsform sieht vor, dass der Tragkörper eine mit dem Halteelement in Kontakt stehende Vorderseite und eine als im wesentlichen ebene Montagefläche ausgestaltete Rückseite aufweist, wobei eine Verrastung der Rastelemente von der Montagefläche in Richtung der Vorderseite versenkt ausgestaltet ist. Durch die Versenkung der Rastelemente werden die Rastköpfe vollständig von dem Tragkörper aufgenommen, so daß keine unnötigen Elemente über die von der Montagefläche aufgespannten Ebene herausragen, wodurch die Montage der Triebmitteleinheit vereinfacht wird.

Günstigerweise kann die Hinterschneidung als Bestandteil einer sich von der Montagefläche erstreckenden Rastvertiefung ausgestaltet sein, die den Rastkopf des Raststifts aufnimmt. Die Rastvertiefung vereinfacht besonders bei nahe beieinander positionierten Rastelementen die Konstruktion des Tragkörpers und ermöglicht zusätzlich eine gute Kontrolle der Verrastung.

Eine weitere Ausgestaltung sieht vor, dass zwischen mindestens zwei Triebmittelrädern eine Führungsschiene zur Führung des Endlostriebmittels befestigt ist. Die Führungsschiene führt das Endlostriebmittel während des Betriebs in der vorgesehenen Position.

Eine vorteilhafte Variante sieht vor, dass die Führungsschiene durch mindestens ein Rastelement mit dem Tragkörper verrastet ist. Durch das Rastelement kann die Führungsschiene schnell montiert und sicher positioniert werden.

Eine bevorzugte Ausführungsform sieht vor, dass eine Verrastung der Rastelemente der Führungsschiene von der Montagefläche in Richtung der Vorderseite versenkt ausgestaltet ist. Auch hierdurch wird die Montage der Triebmitteleinheit vereinfacht, da die Rastelemente vollständig von dem Tragkörper aufgenommen werden und so keine unnötigen Elemente über die von der Montagefläche aufgespannten Ebene herausragen.

Ein günstiges Ausbildungsbeispiel sieht vor, dass mindestens eine Spanneinrichtung am Tragkörper angeordnet ist, durch die zwischen zwei Triebmittelrädern eine Vorspannung auf das Endlostriebmittel aufgebracht ist. Die Anordnung der Spanneinrichtung am Tragkörper bietet die Möglichkeit, eine kompakte Triebmitteleinheit vorab zusammenzustellen, die in einem einzigen Montageschritt montiert werden kann. Auch kann die Spanneinrichtung zur Vorspannung des Endlostriebmittel genutzt werden, wodurch eine Sicherung der Triebmittelräder in der vormontierten Stellung ermöglicht wird.

Eine vorteilhafte Ausgestaltung sieht vor, dass die Spanneinrichtung eine schwenkbar am Tragkörper angeordnete Spannschiene ist. Durch die schwenkbare Anordnung ist die Spannschiene einfach montierbar und verschiedene Hebelkräfte durch unterschiedliche Spannansatzpunkte erreichbar.

Eine günstige Variante sieht vor, dass die Spanneinrichtung durch eine Federeinrichtung vorgespannt ist. Durch unterschiedliche Ausgestaltungsmöglichkeiten der Federeinrichtung lassen sich für beliebige Einsatzzwecke unterschiedliche Kraftverläufe verwirklichen.

Bevorzugt kann die Federeinrichtung eine Blattfeder sein. Die Blattfeder ermöglicht eine einfache Konstruktion der Federeinrichtung mit wenigen Komponenten.

Eine weitere Ausbildungsform sieht vor, dass das Halteelement aus Kunststoff besteht. Bei unterschiedlichen Anforderungen an das Halteelement, z.B. in Abhängigkeit von der Anzahl der Triebmittelräder, können die benötigten Eigenschaften durch die Verwendung von unterschiedlichen Kunststoffen gezielt eingestellt werden. Hier können die verschiedenen für diesen Einsatzzweck geeigneten Kunststoffe wie reine Thermo- oder Duroplaste aber auch gefüllte, faserverstärkte oder unterschiedliche Kombinationen eingesetzt werden. Diese ermöglichen zum Teil eine einfache und kostengünstige Produktion des Halteelements mit hohen Anforderungen an die Maßgenauigkeit, Festigkeit und Steifigkeit bei gleichzeitig guten Federungs- und Gleiteigenschaften.

Aus Vereinfachungsgründen kann der Tragkörper aus einem Aluminium-Druckgußteil bestehen. Als Aluminium-Druckgußteil erreicht der Tragkörper eine hohe Festigkeit bei gleichzeitig günstigen Schwingungseigenschaften. Neben der bevorzugten Ausführungsform als Aluminium-Druckgußteil kann der Tragkörper prinzipiell auch als Blech- oder Aluminiumblechbiegeteil sowie als Kunststofformteil realisiert werden.

Eine vorteilhafte Ausgestaltung sieht vor, dass sich die durch den Tragkörper gebildete Seitenwand der bereichsweise von dem Halteelement gebildeten Haltetasche mindestens bis zum Außenumfang des Triebmittelrades erstreckt und diese Seitenwand eine, mit einer axialen Nabenbohrung des Triebmittelrades fluchtende Durchgangsöffnung aufweist. Die Rückseite des Tragkörpers erstreckt sich im Bereich des unterstützten Triebmittelrades ringförmig um die mit der axialen Nabenbohrung fluchtende Durchgangsöffnung, wodurch dieser Bereich eine hohe Festigkeit erzielt, die auch für die Aufnahme von Kraft einleitenden Komponenten der Triebmitteleinheit, z.B. der Spanneinrichtung, verwendet werden kann.

Im folgenden wird eine Ausführungsform der vorliegenden Erfindung anhand einer Zeichnung beispielhaft näher erläutert. Es zeigen:
- Fig. 1: eine perspektivische Vorderansicht der erfindungsgemäßen vormontierten Triebmitteleinheit,
- Fig. 2: die vormontierte Triebmitteleinheit aus Figur 1 in perspektivischer Rückseitenansicht,

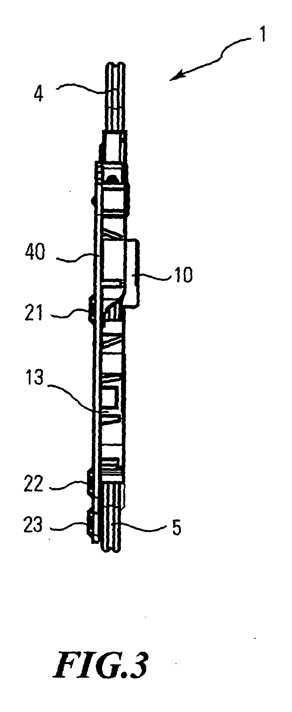

- Fig. 3: eine Seitenansicht der vormontierten Triebmitteleinheit,
- Fig. 4: eine perspektivische Ansicht des Halteelements aus Figur 1,
- Fig. 5: das Halteelement aus Figur 4 in perspektivischer Rückansicht,
- Fig. 6: eine Querschnittsansicht des Halteelements im Bereich des Rastelements entlang der Linie VI-VI in Figur 5.

Die in den Figuren dargestellte erfindungsgemäße vormontierte Triebmitteleinheit 1 ist als Aggregatantrieb an einer Brennkraftmaschine vorgesehen.

Die vormontierte Triebmitteleinheit 1 besteht aus einem plattenförmigen Tragkörper 2, einem angetriebenen Kurbelwellenkettenrad 3, zwei weiteren Kettenrädern 4 und 5 und einer Antriebskette 6. Die Kettenräder 4 und 5 treiben Aggregate der Brennkraftmaschine an und sind in den vom Tragkörper 2 ausgebildeten Haltetaschen 7 und 8 positioniert. Das Kurbelwellenkettenrad 3 wird durch das Halteelement 9 radial an der Nabe 10 des Kurbelwellenkettenrades 3 abgestützt und in der Montageposition gehalten. Das Halteelement 9 bildet zusammen mit dem Tragkörper 2 eine Haltetasche 11 für das Kurbelwellenkettenrad 3, wobei das Halteelement 9 eine radial sichernde Seitenwand 31 und eine obere axial sichernde Seitenwand 32 der Haltetasche 11 bildet, während die untere axiale Begrenzung der Haltetasche 11 durch den Tragkörper 2 entsteht.

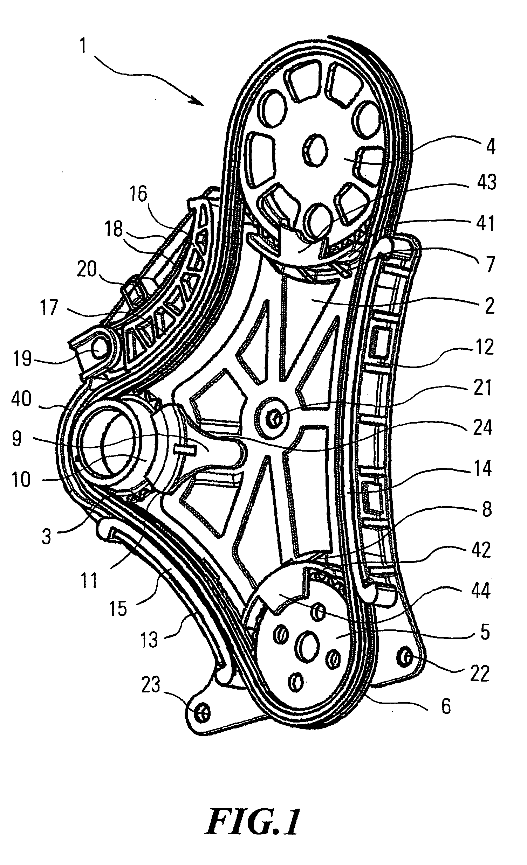

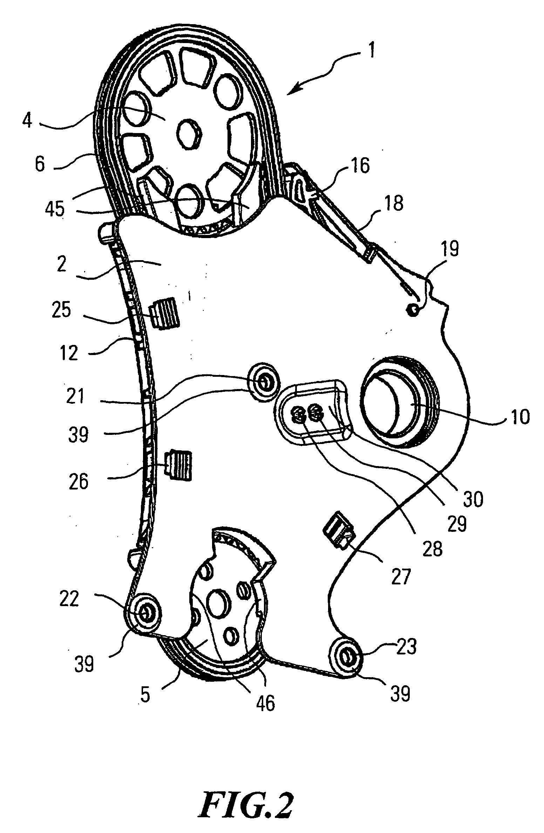

Die Haltetaschen 7 und 8 werden aus den, mit dem Tragkörper 2 verbundenen, radial sichernden Seitenwänden 41 und 42 und axialen Sicherungselementen gebildet. Die Seitenwänden 41 und 42 erstrecken sich im wesentlichen auf den nicht von der Antriebskette 6 umschlossenen Bereich der Kettenräder 4 und 5. Zur axialen Sicherung der Kettenräder 4 und 5 weisen die Haltetaschen 7 und 8 L-förmig zu den Seitenwänden 41 und 42 angeordnete Laschen 43 bis 46 auf, wobei zur axialen Sicherung der in Figur 1 dargestellten Vorderseite jeweils mittig eine Lasche 43 und 44 ausgebildet ist, die sich über einem Drittel der Seitenwände 41 und 42 erstreckt. Auf der Rückseite des Tragkörpers 2 in Figur 2 werden die Kettenräder 4 und 5 durch zwei zweiteilig ausgeführte Laschen 45 und 46 axial gesichert, wobei der von den Laschen 43 und 44 auf der Vorderseite bedeckte Bereich der Haltetaschen 7 und 8 auf der Rückseite frei bleibt.

Auf der Vorderseite der Triebmitteleinheit 1 in Figur 1 sind zwischen den Kettenrädern 4 und 5 sowie zwischen dem Kettenrad 5 und dem Kurbelwellenkettenrad 3 zur Führung der Antriebskette 6 zwei außenliegende, bogenförmige Führungsschienen 12 und 13 am Tragkörper 2 ausgebildet. Zur Erhöhung der Festigkeit sind sowohl an den Außenseiten der Führungsschienen 12 und 13 als auch an den vom Tragkörper 2 gebildeten radial sichernden Seitenwänden 41 und 41 keilförmige Versteifungselemente ausgebildet. Der Tragkörper 2 selbst ist durch Streben entlang der durch die Antriebskette 6 und die Kettenräder 3 bis 5 begrenzten Innenfläche sowie durch sternförmig diese Innenfläche durchquerende Streben versteift.

Zur Spannung der Antriebskette 6 ist auf dem Tragkörper 2 zwischen dem Kurbelwellenkettenrad 3 und dem Kettenrad 4 außerhalb der Antriebskette 6 eine Spannschiene 16 mit einer bogenförmigen Andrückfläche 17 angebracht. Das zum Kurbelwellenkettenrad 3 gerichtete Ende der Spannschiene 16 ist auf einem mit dem Tragkörper 2 verbundenen Stift 19 drehbar gelagert. Zur Verstärkung des Tragkörpers 2 im Bereich des Kurbelwellenkettenrades 3 ist zwischen der Führungsschiene 13 und dem Stift 19 eine äußere Seitenwand 40 ausgebildet, die den äußeren Umfang Kurbelwellenkettenrades 3 umschließt und an der Außenseite mit keilförmigen Versteifungselementen versehen ist. Die zur Spannung der Antriebskette 6 notwendige Spannkraft wird durch eine Blattfeder 18 aufgebracht, die auf der der Andrückfläche 17 abgewandten Außenseite der Spannschiene 16 angreift. Die Blattfeder 18 ist mit einer Spannhülse 20 spannbar, wobei sich die Spannhülse 20 am fest eingespannten äußeren Teil der zweiteiligen Blattfeder 18 abstützt. Zur Endmontage der vormontierten Triebmitteleinheit sind in der Mitte des Tragkörpers 2 eine Bohrung 21, sowie zwei weitere Bohrungen 22 und 23 seitlich des Kettenrades 5 vorgesehen.

Die Führungsschienen 12 und 13 sind zum Verschleißschutz auf der Seite der Antriebskette 6 mit Führungsbelägen 14 und 15 versehen, wobei die Enden der Führungsbeläge 14 und 15 um die Enden der Führungsschienen 12 und 13 herumgreifen. Zur Befestigung ist der Führungsbelag 14 mit zwei Rastelementen 25 und 26 und der Führungsbelag 15 mit einem Rastelement 27 ausgestaltet, wobei sich die Rastelemente 25 bis 27 auf der zum Tragkörper 2 gerichteten Seite der Führungsbeläge 14 und 15 befinden. Die Rastelemente 25 bis 27 werden in entsprechenden Durchbrüchen im Tragkörper 2 befestigt, wobei die Rastelement 25 bis 27 auf der Rückseite des Tragkörpers 2 an den Öffnungen der Durchbrüche verrasten. Wie in Figur 2 dargestellt sind die Öffnungen der Durchbrüche gegenüber der durch die Rückwand des Tragkörpers 2 aufgespannten Fläche zurückgesetzt, wodurch die Rastelemente 25 bis 27 nicht über diese ebene Fläche hervorstehen.

Das Halteelement 9 ist auf der in Figur 1 abgebildeten Vorderseite des Tragkörpers 2 auf der Montagefläche 24 befestigt. Die Montagefläche 24 bildet mit den aus der Grundplatte des Tragkörpers herausragenden Versteifungsstreben und der unteren axialen Begrenzung der Haltetasche 11 eine ebene Fläche. Das Halteelement ist mit zwei Raststiften 36 und 37 am Tragkörper 2 befestigt, wobei die Raststifte 36 und 37 in zwei Bohrungen in der Montagefläche 24 eingreifen und die Rastköpfe 28 und 29 auf der in Figur 2 dargestellten Rückseite des Tragkörpers 2 an den Öffnungen der Bohrungen einrasten. Die Bohrungen für die Raststifte 36 und 37 enden in einer unterhalb der durch die Rückwand aufgespannten Fläche gelegenen Rastvertiefung 30. Dadurch ragen die Rastköpfe 28 und 29 des Halteelements 9 nicht über die Ebene der Rückwand hervor. Bis auf die durch die Hülsen 39 verstärkten Bohrungen 21 bis 24 bildet die Rückwand des Tragkörpers 2 eine ebene Montagefläche.

Der Tragkörper 2 ist im Bereich des Kettenrades 4 bis auf die axial sichernde zweiteilige Seitenwand 45 der Haltetasche 7 offen gestaltet. Die zweiteilige Seitenwand 45 wird durch zwei über das Ende des Tragkörpers 2 herausragende Versteifungsstreben gebildet. Im Bereich des Kettenrades 5 ist der Tragkörper 2 zur Aufnahme der Bohrungen 22 und 23 an beiden Seiten des Kettenrades 5 weitergeführt. Auch hier wird die axial sichernde zweiteilige Seitenwand 46 der Haltetasche 8 durch zwei Versteifungsstreben gebildet, die von der Rückwand des Tragkörpers 2 bedeckt sind. Die beiden im Bereich des Kettenrad 5 seitlich ausgebildeten Teile des Tragkörpers 2 sind nicht miteinander verbunden. Im Bereich des Kurbelwellenkettenrades 3 erstreckt sich der Tragkörper 2 hingegen bis zur Seitenwand 40, entsprechend bis zum Außenumfang des Kurbelwellenkettenrades 3 mit einer Öffnung für die Nabe 10.

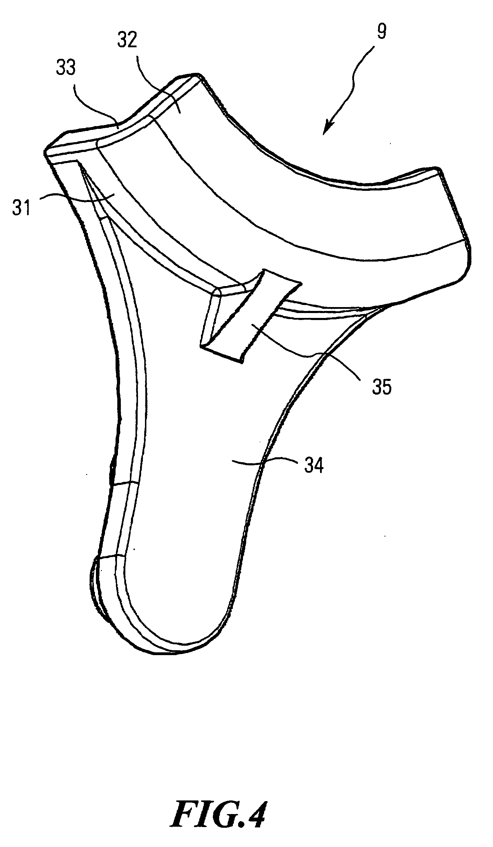

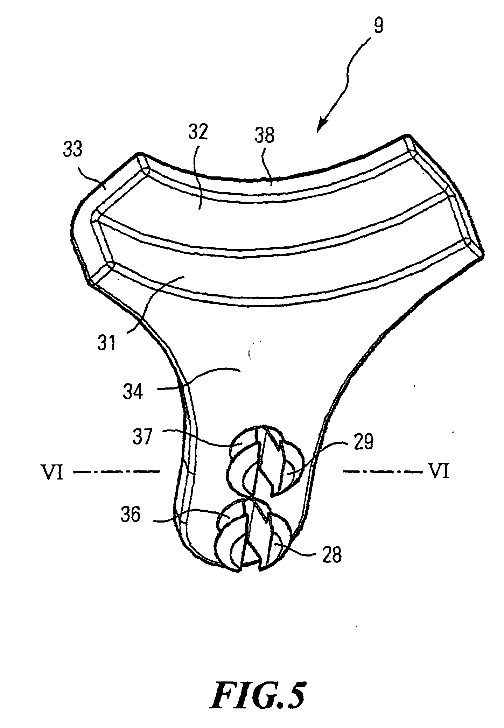

Das Halteelement 9 besteht, wie in Figur 4 deutlich dargestellt, aus der L-förmigen Aufnahme 33 für das Kurbelwellenkettenrad 3, der Befestigungszunge 34 und dem Versteifungselement 35 zur besseren Kraftübertragung zwischen Befestigungszunge 34 und L-förmiger Aufnahme 33. Die L-förmigen Aufnahme 33 setzt sich aus der radial sichernder Seitenwand 31 und der axial sichernder Seitenwand 32 zusammen. Die der radial sichernder Seitenwand 31 ist zur Aufnahme des Kurbelwellenkettenrades 3 konkav ausgestaltet, während die axial sichernder Seitenwand 32 zur radialen Abstützung des Kurbelwellenkettenrades 3 an der Nabe 10 eine ebenfalls konkav geformte Stirnfläche 38 aufweist. Zusätzlich sind wie die Rückansicht des Halteelements in Figur 5 zeigt zwei längsgeschlitzte Raststifte 36 und 37 auf der Rückseite der Befestigungszunge 34 angebracht.

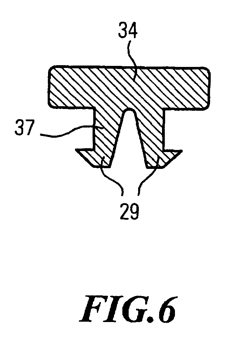

An dem Schnitt durch die Befestigungszunge 34 in Figur 6 ist zu erkennen, dass die längsgeschlitzte Form der Raststifte 36 und 37 bei der Montage ein sicheres beschädigungsfreies Einfedern der Rastköpfe 28 und 29 gewährleistet. Die scharfe Hinterschneidung der Rastköpfe 28 und 29 ermöglicht so eine sichere Verrastung der Rastköpfe 28 und 29 in der Rastvertiefung 30.

Für die Vormontage der Triebmitteleinheit 1 werden zunächst die Führungsbeläge 14 und 15 auf den Führungsschienen 12 und 13 positioniert, die Enden der Führungsbeläge 14 und 15 um die Enden der Führungsschienen 12 und 13 gelegt und mit Hilfe der Rastelemente 25 bis 27 auf der Rückseite des Tragkörpers 2 verrastet. Danach werden die Kettenräder 4 und 5 in den zugehörigen Haltetaschen 7 und 8 positioniert und die Antriebskette 6 um die Kettenräder 4 und 5 gelegt, wobei die Antriebskette 6 straff an der Führungsschiene 12 verläuft. Anschließend wird das Kurbelwellenkettenrad 3 in den frei auf dem Tragkörper 2 laufenden Teil der Antriebskette 6 eingelegt und auf der ebenen Montagefläche 24 für das Halteelements 9 in die vorgesehene Position auf dem Tragkörper 2 geschoben. Auch hier liegt die Antriebskette 6 an der Führungsschiene 13 an. Im nächsten Schritt wird die Befestigungszunge 34 des Halteelements 9 auf der Montagefläche 24 positioniert und die Raststifte 36 und 37 in die Bohrungen auf der Montagefläche 24 eingeführt. Dabei verrasten die Rastköpfe 28 und 29 der Raststifte 36 und 37 auf der Rückseite des Tragkörpers 2 in der Rastvertiefung 30. Durch das Halteelement 9 wird die Position des Kurbelwellenkettenrades 3 gesichert. Zur Vervollständigung der vormontierten Triebmitteleinheit 1 wird die Spannschiene 16 auf dem Stift 19 befestigt und der äußere Teil der Blattfeder 18 am Tragkörper 2 fest eingespannt. Die Spannhülse 20 wirkt über den freien Teil der Blattfeder 18 auf die Spannschiene 16 und bringt dadurch eine zur Fixierung der vormontierten Triebmitteleinheit 1 notwendige Vorspannung auf.

Die bogenförmige Andrückfläche 17 der Spannschiene 16 überträgt die zur Spannung der Antriebskette 6 notwendige Spannkraft, wobei die Spannkraft mit Hilfe der drehbaren Lagerung gleichmäßig auf die Antriebskette 6 übertragen wird. Auch geringe Längenunterschiede der Antriebskette 6 können durch die drehbare Lagerung der Spannschiene 16 auf dem Stift 19 ausgeglichen werden. Die notwendige Spannkraft wird durch die Blattfeder 18 aufgebracht. Die Spannkraft der Blattfeder 18 kann durch die auf dem fest am Tragkörper 2 eingespannten Teil der Blattfeder 18 verschiebbar gelagerte Spannhülse 20 eingestellt werden, wobei sich die Spannhülse 20 an dem eingespannten Teil der Blattfeder 18 abstützt. Über den Stift 19 und den eingespannten Teil der Blattfeder 18 greifen lokal große Kräfte am Tragkörper 2 an. Um diese Kräfte aufzunehmen erstreckt sich der Tragkörper 2 in diesem Bereich bis zum Außenumfang des Kurbelwellenkettenrades 3 und ist mit einer den äußeren Umfang des Kurbelwellenkettenrades 3 umschließenden Seitenwand 40 verstärkt.

Über die verschiedenen Bohrungen 21 bis 23 kann die Triebmitteleinheit 1 während der Endmontage sicher bewegt werden. Durch geringe Bauhöhe kann die vormontierte Triebmitteleinheit 1 bei der Endmontage sehr gut in schmale Schächte an Brennkraftmaschinen eingeführt werden. Die ebene Rückwand läßt sich schnell an einer entsprechenden Fläche am Motorblock befestigen. Die exakte Position der Triebmitteleinheit 1 am Motorblock wird durch die Bohrungen 21 bis 24 bestimmt, wobei die Hülsen 39 der Bohrungen 21 bis 24 in die entsprechend ausgestalteten Öffnungen der Gewindebohrungen am Motorblock eingreifen. In den letzten Schritten wird die Triebmitteleinheit 1 durch die Bohrungen 21 bis 24 mit dem Motorblock verschraubt, die Antriebswellen werden auf die Kettenräder 3 bis 5 geschoben und mit ihnen befestigt.

Im Betrieb wird die Triebmitteleinheit 1 über das Kurbelwellenkettenrad 3 angetrieben und mit den Kettenrädern 4 und 5 werden zwei Aggregate der Brennkraftmaschine betrieben. Während des Betriebs laufen die Kettenräder 3 bis 5 frei in den Haltetaschen 7, 8 und 10 ohne am Tragkörper anzuliegen. Die Spannkraft der auf die Spannschiene 16 drückenden Blattfeder 18 ist im Vergleich zur Spannung im vormontierten Zustand erhöht, um eine sichere Funktion der Triebmitteleinheit während des Betriebs zu erreichen.

## Patentansprüche

1. Vormontierte Triebmitteleinheit (1) mit einem einteilig ausgebildeten Tragkörper (2), mindestens zwei in Haltetaschen (7,8,11) am Tragkörper (2) angeordneten Triebmittelrädern (3-5) und einem gemeinsam um die Triebmittelräder (3-5) gelegten Endlostriebmittel (6), wobei mindestens ein Bestandteil einer Haltetasche (11) durch ein auf dem Tragkörper (2) mittels mindestens einer Befestigungseinrichtung angebrachtes Halteelement (9) gebildet ist,
**dadurch gekennzeichnet, dass** das Halteelement (9) eine Abstützeinrichtung zum radialen Abstützen des Triebmittelrades (3) aufweist.

2. Triebmitteleinheit nach Anspruch 1,
**dadurch gekennzeichnet, dass** das durch das Halteelement (9) abgestützte Triebmittelrad (3) eine Nabe (10) aufweist und dass die Abstützeinrichtung die Nabe (10) des Triebmittelrades (3) radial abstützt.

3. Triebmitteleinheit nach Anspruch 1 oder 2,
**dadurch gekennzeichnet, dass** das Halteelement (9) mindestens eine das Triebmittelrad (3) axial sichernde Seitenwand der Haltetasche (32) aufweist.

4. Triebmitteleinheit nach Anspruch 3,
**dadurch gekennzeichnet, dass** das Halteelement (9) eine die Abstützeinrichtung umfassende und im Querschnitt im wesentlichen L-förmige Aufnahme (33) als Bestandteil der Haltetasche (11) umfasst, deren erster L-Schenkel parallel und deren anderer L-Schenkel senkrecht zu einer Achse des Triebmittelrades (3) ausgerichtet ist und der senkrecht verlaufende L-Schenkel mindestens eine axial sichernde Seitenwand (32) der Haltetasche (11) umfasst.

5. Triebmitteleinheit nach Anspruch 4,
**dadurch gekennzeichnet, dass** die Abstützeinrichtung von dem senkrecht verlaufenden L-Schenkel gebildet ist, der mit einer an die Außenkontur der Nabe (10) angepassten konkaven Stirnfläche (38) an dieser formschlüssig anliegend ausgestaltet ist.

6. Triebmitteleinheit nach einem der Ansprüche 3 bis 5,
**dadurch gekennzeichnet, dass** eine weitere in einer zweiten Richtung axial sichernde Seitenwand der bereichsweise von dem Halteelement (9) gebildeten Haltetasche (11) von dem Tragkörper (2) gebildet ist.

7. Triebmitteleinheit nach einem der Ansprüche 1 bis 6,
**dadurch gekennzeichnet, dass** das Halteelement (9) gegenüber dem vom Endlostriebmittel (6) umschlossenen Bereich des abgestützten Triebmittelrades (3) auf dem Tragkörper (2) angebracht ist.

8. Triebmitteleinheit nach einem der Ansprüche 1 bis 7,
**dadurch gekennzeichnet, dass** die Abstützeinrichtung das Triebmittelrad über einen Winkelbereich von 60° bis 120° abstützend ausgestaltet ist.

9. Triebmitteleinheit nach Anspruch 8,
**dadurch gekennzeichnet, dass** die Abstützeinrichtung das Triebmittelrad über einen Winkelbereich von 70° bis 90° abstützend ausgestaltet ist.

10. Triebmitteleinheit nach einem der Ansprüche 1 bis 9,
**dadurch gekennzeichnet, dass** die Befestigungseinrichtung mindestens eine von der Haltetasche (11) wegweisende mit dem Tragkörper im wesentlichen flächig zur Anlage gebrachte Befestigungszunge (34) aufweist.

11. Triebmitteleinheit nach Anspruch 10,
**dadurch gekennzeichnet, dass** zwischen der Befestigungszunge (34) und der L-förmigen Aufnahme (33) des Halteelements (9) mindestens ein Versteifungselement (35) ausgebildet ist.

12. Triebmitteleinheit nach einem der Ansprüche 1 bis 11,
**dadurch gekennzeichnet, dass** die Befestigungseinrichtung mindestens ein mit dem Tragkörper (2) verrastetes Rastelement aufweist.

13. Triebmitteleinheit nach Anspruch 12,
**dadurch gekennzeichnet, dass** das Rastelement als längsgeschlitzter, radial einfedernder Raststift (36,37) ausgestaltet ist.

14. Triebmitteleinheit nach Anspruch 13,
**dadurch gekennzeichnet, dass** der Raststift (36,37) einen radial einfedernden Rastkopf (28,29) und der Tragkörper (2) eine Rastöffnung mit einer Hinterschneidung aufweist, wobei der Rastkopf (28,29) im eingefederten Zustand durch die Rastöffnung des Tragkörpers (2) hindurchschiebbar ausgestaltet ist und an einem Endbereich der Rastöffnung an der Hinterschneidung am Tragkörper (2) verrastet ist.

15. Triebmitteleinheit nach einem der Ansprüche 12 bis 14,
**dadurch gekennzeichnet, dass** der Tragkörper (2) eine mit dem Halteelement (9) in Kontakt stehende Vorderseite und eine als im wesentlichen ebene Montagefläche ausgestaltete Rückseite aufweist, wobei eine Verrastung der Rastelemente von der Montagefläche in Richtung der Vorderseite versenkt ausgestaltet ist.

16. Triebmitteleinheit nach Anspruch 15,
**dadurch gekennzeichnet, dass** die Hinterschneidung als Bestandteil einer sich von der Montagefläche erstreckenden Rastvertiefung (30) ausgestaltet ist, die den Rastkopf (28,29) des Raststifts (36,37) aufnimmt.

17. Triebmitteleinheit nach einem der Ansprüche 1 bis 16,
**dadurch gekennzeichnet, dass** zwischen mindestens zwei Triebmittelrädern (3-5) eine Führungsschiene (12,13) zur Führung des Endlostriebmittels (6) befestigt ist.

18. Triebmitteleinheit nach Anspruch 17,
**dadurch gekennzeichnet, dass** die Führungsschiene (12,13) durch mindestens ein Rastelement (25-27) mit dem Tragkörper (2) verrastet ist.

19. Triebmitteleinheit nach Anspruch 18,
**dadurch gekennzeichnet, dass** eine Verrastung der Rastelemente (25-27) der Führungsschiene (12,13) von der Montagefläche in Richtung der Vorderseite versenkt ausgestaltet ist.

20. Triebmitteleinheit nach einem der Ansprüche 1 bis 19,
**dadurch gekennzeichnet, dass** mindestens eine Spanneinrichtung am Tragkörper angeordnet ist, durch die zwischen zwei Triebmittelräder (3-5) eine Vorspannung auf das Endlostriebmittel (6) aufgebracht ist.

21. Triebmitteleinheit nach Anspruch 20,
**dadurch gekennzeichnet, dass** die Spanneinrichtung eine schwenkbar am Tragkörper (2) angeordnete Spannschiene (16) ist.

22. Triebmitteleinheit nach Anspruch 20 oder 21,
**dadurch gekennzeichnet, dass** die Spanneinrichtung durch eine Federeinrichtung vorgespannt ist.

23. Triebmitteleinheit nach Anspruch 22,
**dadurch gekennzeichnet, dass** die Federeinrichtung eine Blattfeder (18) ist.

24. Triebmitteleinheit nach einem der Ansprüche 1 bis 23,
**dadurch gekennzeichnet, dass** das Halteelement (9) aus Kunststoff besteht.

25. Triebmitteleinheit nach einem der Ansprüche 1 bis 24,
**dadurch gekennzeichnet, dass** der Tragkörper (2) aus einem Aluminium-Druckgußteil besteht.

26. Triebmitteleinheit nach einem der Ansprüche 3 bis 25,
**dadurch gekennzeichnet, dass** die durch den Tragkörper (2) gebildete Seitenwand der bereichsweise von dem Halteelement (9) gebildeten Haltetasche (11) sich mindestens bis zum Außenumfang des Triebmittelrades (3) erstreckt und diese Seitenwand eine, mit einer axialen Nabenbohrung des Triebmittelrades (3) fluchtende Durchgangsöffnung aufweist.

## Claims

1. Preassembled distribution unit (1) having a supporting body (2), which is designed as a single part, at least two distribution wheels (3-5) arranged in retaining pockets (7, 8, 11) on the supporting body (2) and an endless distribution means (6) placed jointly around the distribution wheels (3-5), at least one part of a retaining pocket (11) being formed by a retaining element (9) fixed on the supporting body (2) by means of at least one fastening device, **characterized in that** the retaining element (9) has a supporting device for radially supporting the distribution wheel (3).

2. Distribution unit according to Claim 1, **characterized in that** the distribution wheel (3) supported by the retaining element (9) has a hub (10), and **in that** the supporting device supports the hub (10) of the distribution wheel (3) radially.

3. Distribution unit according to Claim 1 or 2, **characterized in that** the retaining element (9) has at least one side wall of the retaining pocket (32), which side wall axially secures the distribution wheel (3).

4. Distribution unit according to Claim 3, **characterized in that** the retaining element (9) comprises, as part of the retaining pocket (11), a mount (33) which surrounds the supporting device, is essentially L-shaped in cross section and the first L-limb of which is aligned parallel, and the other L-limb of which is aligned perpendicularly, to an axis of the distribution wheel (3), and the L-limb running perpendicularly comprises at least one axially securing side wall (32) of the retaining pocket (11).

5. Distribution unit according to Claim 4, **characterized in that** the supporting device is formed by the L-limb which runs perpendicularly and is designed in a manner such that it bears in a form-fitting manner against the outer contour of the hub (10) by means of a concave end surface (38) matched thereto.

6. Distribution unit according to one of Claims 3 to 5, **characterized in that** a further side wall, which is axially securing in a second direction, of the retaining pocket (11), which is formed in some regions by the retaining element (9), is formed by the supporting body (2).

7. Distribution unit according to one of Claims 1 to 6, **characterized in that** the retaining element (9) is fixed on the supporting body (2) in relation to that region of the supported distribution wheel (3) which is surrounded by the endless distribution means (6).

8. Distribution unit according to one of Claims 1 to 7, **characterized in that** the supporting device is designed in a manner that such that it supports the distribution wheel over an angular region of 60° to 120°.

9. Distribution unit according to Claim 8, **characterized in that** the supporting device is designed in a manner such that it supports the distribution wheel over an angular region of 70° to 90°.

10. Distribution unit according to one of Claims 1 to 9, **characterized in that** the fastening device has at least one fastening tongue (34) which faces away from the retaining pocket (11) and is brought into contact with the supporting body essentially over an extensive area.

11. Distribution unit according to Claim 10, **characterized in that** at least one stiffening element (35) is formed between the fastening tongue (34) and the L-shaped mount (33) of the retaining element (9).

12. Distribution unit according to one of Claims 1 to 11, **characterized in that** the fastening device has at least one latching element latched to the supporting body (2).

13. Distribution unit according to Claim 12, **characterized in that** the latching element is designed as a longitudinally slit, radially compressing latching pin (36, 37).

14. Distribution unit according to Claim 13, **characterized in that** the latching pin (36, 37) has a radially compressing latching head (28, 29) and the supporting body (2) has a latching opening with an undercut, the latching head (28, 29) being designed such that, in the compressed state, it can be pushed through the latching opening of the supporting body (2) and, in an end region of the latching opening, is latched on the undercut on the supporting body (2).

15. Distribution unit according to one of Claims 12 to 14, **characterized in that** the supporting body (2) has a front side in contact with the retaining element (9) and a rear side designed as an essentially flat mounting surface, a latching of the latching elements from the mounting surface in the direction of the front side being of recessed design.

16. Distribution unit according to Claim 15, **characterized in that** the undercut is designed as part of a latching depression (30) which extends from the mounting surface and receives the latching head (28, 29) of the latching pin (36, 37).

17. Distribution unit according to one of Claims 1 to 16, **characterized in that** a guide rail (12, 13) for guiding the endless distribution means (6) is fastened between at least two distribution wheels (3-5).

18. Distribution unit according to Claim 17, **characterized in that** the guide rail (12, 13) is latched to the supporting body (2) by at least one latching element (25-27).

19. Distribution unit according to Claim 18, **characterized in that** a latching of the latching elements (25-27) of the guide rail (12, 13) from the mounting surface in the direction of the front side is of recessed design.

20. Distribution unit according to one of Claims 1 to 19, **characterized in that** at least one tensioning device is arranged on the supporting body and is used to pretension the endless distribution means (6) between two distribution wheels (3-5).

21. Distribution unit according to Claim 20, **characterized in that** the tensioning device is a tensioning rail (16) arranged pivotably on the supporting body (2).

22. Distribution unit according to Claim 20 or 21, **characterized in that** the tensioning device is pretensioned by a spring device.

23. Distribution unit according to Claim 22, **characterized in that** the spring device is a leaf spring (18).

24. Distribution unit according to one of Claims 1 to 23, **characterized in that** the retaining element (9) consists of plastic.

25. Distribution unit according to one of Claims 1 to 24, **characterized in that** the supporting body (2) consists of an aluminium diecast part.

26. Distribution unit according to one of Claims 3 to 25, **characterized in that** the side wall, which is formed by the supporting body (2), of the retaining pocket (11), which is formed in some regions by the retaining element (9), extends at least as far as the outer circumference of the distribution wheel (3) and this side wall has a passage opening aligned with an axial hub bore of the distribution wheel (3).

## Revendications

1. Unité de transmission pré-assemblée (1) comportant un corps de support (2) conçu d'une seule pièce, au moins deux roues de transmission (3 à 5) disposées sur le corps de support (2) dans des poches de retenue (7, 8, 11), et un mécanisme de transmission sans fin (6) commun placé autour des roues de transmission (3 à 5), dans laquelle au moins un composant d'une poche de retenue (11) est formé par un élément de retenue (9) appliqué sur le corps de support (2) au moyen d'au moins un dispositif de fixation, **caractérisée en ce que** l'élément de retenue (9) présente un dispositif d'appui permettant l'appui radial de la roue de transmission (3).

2. Unité de transmission selon la revendication 1, **caractérisée en ce que** la roue de transmission (3) appuyée par l'élément de retenue (9) présente un moyeu (10) et **en ce que** le dispositif d'appui appuie le moyeu (10) de la roue de transmission (3) dans la direction radiale.

3. Unité de transmission selon la revendication 1 ou 2, **caractérisée en ce que** l'élément de retenue (9) présente au moins une paroi latérale de la poche de retenue (32) sécurisant la roue de transmission (3) dans la direction axiale.

4. Unité de transmission selon la revendication 3, **caractérisée en ce que** l'élément de retenue (9) comprend en tant qu'élément de la poche de retenue (11) un logement (33) englobant le dispositif d'appui et se présentant essentiellement en forme de L en coupe transversale, dont la première branche du L est orientée parallèlement à et dont l'autre branche du L est orientée perpendiculairement à un axe de la roue de transmission (3), la branche du L qui s'étend perpendiculairement comportant au moins une paroi latérale (32) de la poche de retenue (11) qui assure un arrêt axial.

5. Unité de transmission selon la revendication 4, **caractérisée en ce que** le dispositif d'appui est formé par la branche du L s'étendant perpendiculairement, qui est élaborée pour reposer, avec une face avant concave (38) adaptée au contour externe du moyeu (10), contre celui-ci, par engagement de forme.

6. Unité de transmission selon l'une des revendications 3 à 5, **caractérisée en ce qu'**une autre paroi latérale, assurant l'arrêt axial dans une seconde direction, de la poche de retenue (11) formée, par zones, de l'élément de retenue (9), est formée par le corps de support (2).

7. Unité de transmission selon l'une des revendications 1 à 6, **caractérisée en ce que** l'élément de retenue (9) est appliqué sur le corps de support (2) à l'opposé de la zone de la roue de transmission appuyée (3) entourée du mécanisme de transmission sans fin (6).

8. Unité de transmission selon l'une des revendications 1 à 7, **caractérisée en ce que** le dispositif d'appui est élaboré pour appuyer sur la roue de transmission sur une zone angulaire de 60° à 120°.

9. Unité de transmission selon la revendication 8, **caractérisée en ce que** le dispositif d'appui est élaboré pour appuyer sur la roue de transmission sur une zone angulaire de 70° à 90°.

10. Unité de transmission selon l'une des revendications 1 à 9, **caractérisée en ce que** le dispositif de fixation présente au moins une langue de fixation (34) s'éloignant de la poche de retenue (11) et appliquée de façon à affleurer essentiellement avec le corps de support.

11. Unité de transmission selon la revendication 10, **caractérisée en ce qu'**entre la langue de fixation (34) et le logement en forme de L (33) de l'élément de retenue (9) est exécuté au moins un élément de renforcement (35).

12. Unité de transmission selon l'une des revendications 1 à 11, **caractérisée en ce que** le dispositif de fixation présente au moins un élément d'encliquetage enclenché avec le corps de support (2).

13. Unité de transmission selon la revendication 12, **caractérisée en ce que** l'élément d'encliquetage est élaboré comme une tige d'encliquetage (36, 37) à fente longitudinale contrainte par ressort dans la direction radiale.

14. Unité de transmission selon la revendication 13, **caractérisée en ce que** la tige d'encliquetage (36, 37) présente une tête d'encliquetage (28, 29) contrainte par ressort dans la direction radiale et le corps de support (2) présente une ouverture d'encliquetage comportant une contre-dépouille, la tête d'encliquetage (28, 29) étant exécutée pour pouvoir être poussée à l'état contraint par ressort par l'ouverture d'encliquetage du corps de support (2) et étant encliquetée au niveau d'une zone d'extrémité de l'ouverture d'encliquetage contre la contre-dépouille du corps de support (2).

15. Unité de transmission selon l'une des revendications 12 à 14, **caractérisée en ce que** le corps de support (2) présente un côté avant en contact avec l'élément de retenue (9) et un côté arrière élaboré comme une surface de montage essentiellement plane, un encliquetage des éléments d'encliquetage étant réalisé de façon encastrée depuis la surface de montage dans la direction du côté avant.

16. Unité de transmission selon la revendication 15, **caractérisée en ce que** la contre-dépouille est élaborée en tant que composant d'un évidement d'encliquetage (30), qui s'étend depuis la surface de montage, ledit évidement logeant la tête d'encliquetage (28, 29) de la tige d'encliquetage (36, 37).

17. Unité de transmission selon l'une des revendications 1 à 16, **caractérisée en ce qu'**entre au moins deux roues de transmission (3 à 5) est fixée une glissière de guidage (12, 13) permettant de guider le mécanisme de transmission sans fin (6).

18. Unité de transmission selon la revendication 17, **caractérisée en ce que** la glissière de guidage (12, 13) est encliquetée avec le corps de support (2) par au moins un élément d'encliquetage (25 à 27).

19. Unité de transmission selon la revendication 18, **caractérisée en ce qu'**un encliquetage des éléments d'encliquetage (25 à 27) de la glissière de guidage (12, 13) est réalisé de façon encastrée depuis la surface de montage dans la direction du côté avant.

20. Unité de transmission selon l'une des revendications 1 à 19, **caractérisée en ce qu'**est disposé sur le corps de support au moins un dispositif tendeur par le biais duquel on applique une précontrainte sur le mécanisme de transmission sans fin (6) entre deux roues de transmission (3 à 5).

21. Unité de transmission selon la revendication 20, **caractérisée en ce que** le dispositif tendeur est un rail de tension (16) disposé au niveau du corps de support (2) pour pouvoir pivoter.

22. Unité de transmission selon la revendication 20 ou 21, **caractérisée en ce que** le dispositif tendeur est pré-contraint par un dispositif à ressort.

23. Unité de transmission selon la revendication 22, **caractérisée en ce que** le dispositif à ressort est un ressort à lame (18).

24. Unité de transmission selon l'une des revendications 1 à 23, **caractérisée en ce que** l'élément de retenue (9) se compose de matière plastique.

25. Unité de transmission selon l'une des revendications 1 à 24, **caractérisée en ce que** le corps de support (2) se compose d'une pièce en aluminium moulée sous pression.

26. Unité de transmission selon l'une des revendications 3 à 25, **caractérisée en ce que** la paroi latérale, formée par le corps de support (2), de la poche de retenue (11), formée par zones, de l'élément de retenue (9) s'étend au moins jusqu'à la périphérie externe de la roue de transmission (3) et **en ce que** cette paroi latérale présente une ouverture de passage affleurant avec un perçage de moyeu axial de la roue de transmission (3).
